(19) Europäisches Patentamt
European Patent Office
Office européen des brevets

(11) **EP 2 391 133 A1**

(12) **EUROPEAN PATENT APPLICATION**
published in accordance with Art. 153(4) EPC

(43) Date of publication:
**30.11.2011 Bulletin 2011/48**

(51) Int Cl.:
***H04N 7/32*** *(2006.01)*

(21) Application number: **10733216.5**

(22) Date of filing: **14.01.2010**

(86) International application number:
**PCT/CN2010/070191**

(87) International publication number:
**WO 2010/083743 (29.07.2010 Gazette 2010/30)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.01.2009 CN 200910001970**

(71) Applicant: **Huawei Technologies Co., Ltd.
Shenzhen, Guangdong 518129 (CN)**

(72) Inventors:
• **YU, Lou
Shenzhen
Guangdong 518129 (CN)**
• **LI, Shangwen
Shenzhen
Guangdong 518129 (CN)**
• **WANG, Jianpeng
Shenzhen
Guangdong 518129 (CN)**
• **XIONG, Lianhuan
Shenzhen
Guangdong 518129 (CN)**
• **LIN, Sixin
Shenzhen
Guangdong 518129 (CN)**

(74) Representative: **Thun, Clemens
Mitscherlich & Partner
Patent- und Rechtsanwälte
Sonnenstrasse 33
80331 München (DE)**

(54) **ENCODING/DECODING METHOD AND DEVICE BASED ON DOUBLE PREDICTION**

(57) An encoding/decoding method and device based on double prediction are provided according to embodiments of the present invention. The method includes the following steps: After double prediction parameter information in a double prediction procedure is obtained, the double prediction parameter information is encoded according to a pre-established probability model, and an encoding result is written into an encoded code stream. Correspondingly, at a decoding end, after the encoded code stream corresponding to the double prediction parameter information in the double prediction procedure is obtained, the encoded code stream corresponding to the double prediction parameter information is decoded according to a pre-established probability model, so as to obtain the double prediction parameter information. As the encoding/decoding operation is performed based on the established corresponding probability model, the encoding performance on the double prediction parameter information in the double prediction procedure is effectively improved, and the transmission bandwidth occupied by the encoded code stream is reduced.

FIG. 11

**Description**

This application claims priority to Chinese Patent Application No. 200910001970.2, filed with the Chinese Patent Office on January 24, 2009 and entitled "ENCODING/DECODING METHOD AND DEVICE BASED ON DOUBLE PREDICTION", which is incorporated herein by reference in its entirety.

**FIELD OF THE INVENTION**

The present invention relates to the field of encoding/decoding technologies, and in particular, to an encoding/ decoding method and device based on double prediction.

**BACKGROUND OF THE INVENTION**

In the video encoding procedure, in order to reduce the amount of data of video signals and save the storage space and transmission bandwidth of video signals, the video signals can be compressed, so as to reduce redundancy information and compress video data. For example, prediction encoding technologies such as intra-frame prediction encoding and inter-frame prediction encoding may be adopted to reduce time redundancy information and spatial redundancy information in video data. In the prediction encoding procedure, a difference between a predictive value and a value to be encoded serves as residual data for two-dimensional transform encoding and is transmitted to a decoding end, and in the corresponding decoding procedure, a corresponding decoding operation can be performed according to the residual data. The spatial redundancy information and the time redundancy information of the residual data (that is, a residual signal) after the prediction encoding are smaller than the spatial redundancy information and the time redundancy information of the original video signal.

In order to further remove the redundancy in the residual signal, an encoding/decoding technology based on double prediction is proposed currently. In the encoding/decoding technology based on double prediction, that is, based on the prediction encoding/decoding mentioned above (referred to as a first prediction), a corresponding double prediction compensation procedure is implemented, and the corresponding double prediction compensation procedure includes a first prediction compensation procedure and a second prediction compensation procedure. The prediction residual in the current prediction encoding/decoding procedure is referred to as a first residual, the prediction for the first residual is referred to as second prediction, and the prediction residual in the second prediction procedure is referred to as a second residual. Input in the second prediction compensation procedure includes the first residual after reconstruction and the second residual after reconstruction.

The current double prediction technology is double prediction based on the spatial domain prediction technology. Specifically, in the implementation of corresponding double prediction procedure, corresponding syntax elements such as sop_flag, pred_sp_mode_flag, and rem_sp_mode need to be added in an encoded code stream, where

sop_flag is a double prediction mark symbol identifier, configured to identify whether a current macro block adopts the double prediction technology, and has a value of 0 or 1;

pred_sp_mode_flag is a syntax element related to the second intra-frame prediction mode, configured to identify whether the second intra-frame prediction mode predicts accurately, and has a value of 0 or 1; and

rem_sp_mode is a syntax element related to the second intra-frame prediction mode, configured to identify information of the second intra-frame prediction mode when the pred_sp_mode_flag identifies that the second intra-frame prediction model predicts inaccurately, and has a ramdom value among the numbers 0-7 and each value among the numbers 0-7 is corresponding to one intra-frame prediction mode; if pred_sp_mode_flag identifies that the current second intra-frame prediction model predicts accurately, the syntax element rem_sp_mode of the current second intra-frame prediction mode does not exist in the code stream.

The corresponding syntax elements such as sop_flag, pred_sp_mode_flag, and rem_sp_mode are directly written into the code stream.

In the decoding procedure of the second intra-frame prediction mode, initially determine whether the prediction is accurate. If the prediction is accurate, the corresponding intra-frame prediction mode is equal to the mode corresponding to the model prediction value; if the prediction is not accurate, rem_sp_mode information needs to be analyzed from the code stream, so as to determine a corresponding intra-frame prediction mode.

In the implementation of the present invention, the prior art at least has the following disadvantages. In the second prediction compensation procedure, the double prediction technology of spatial domain prediction (that is, intra-frame prediction) is adopted. Because the corresponding syntax elements such as sop_flag, pred_sp_mode_flag, and rem_sp_mode are directly written into the code stream, the increase of mode information in the corresponding double prediction procedure largely offsets the improvement of encoding efficiency brought by the double prediction technology to a large extent, that is, the introduced double prediction mode information in the double prediction technology based on spatial domain prediction hinders the improvements of the double prediction performance.

## SUMMARY OF THE INVENTION

The embodiments of present invention provide an encoding/decoding method and device based on double prediction, which may effectively reduce the space occupied by encoded data and improve the encoding efficiency.

An embodiment of the present invention provides an encoding method based on double prediction, where the method includes:

> obtaining double prediction parameter information in a double prediction procedure; and
> encoding the double prediction parameter information according to a pre-established probability model, and writing an encoding result into an encoded code stream.

An embodiment of the present invention provides an image encoding device based on double prediction, where the device includes:

> a parameter obtaining unit, configured to obtain double prediction parameter information in a double prediction procedure; and
> a parameter encoding unit, configured to encode, according to a pre-established probability model, the double prediction parameter information obtained by the parameter obtaining unit, and write an encoding result into an encoded code stream.

An embodiment of the present invention provides an image decoding method based on double prediction, where the method includes:

> obtaining an encoded code stream corresponding to double prediction parameter information in a double prediction procedure; and
> decoding the encoded code stream corresponding to the double prediction parameter information according to a pre-established probability model, and obtaining the double prediction parameter information.

An embodiment of the present invention provides a decoding device based on double prediction, where the device includes:

> an encoded code stream receiving unit, configured to obtain an encoded code stream corresponding to double prediction parameter information in a double prediction procedure; and
> a decoding unit, configured to decode, according to a pre-established probability model, the encoded code stream corresponding to the double prediction parameter information obtained by the encoded code stream receiving unit, and obtain the double prediction parameter information.

It can be seen from the technical solutions of the present invention that an implementation scheme that the encoding/decoding operation is performed based on an established corresponding probability model is adopted, the encoding performance on double prediction parameter information in a double prediction procedure is effectively improved, the transmission bandwidth occupied by the encoded code stream is reduced, and the encoding efficiency is improved.

## BRIEF DESCRIPTION OF THE DRAWINGS

To illustrate the technical solutions according to the embodiments of the present invention or in the prior art more clearly, the accompanying drawings are described briefly for the embodiments of the present invention or the prior art. Apparently, the accompanying drawings in the following description are only some exemplary embodiments of the present invention, and persons of ordinary skill in the art can derive other drawings from the accompanying drawings without creative efforts.

> FIG. 1 is a schematic view of an encoding procedure of a syntax element sop_flag according to an embodiment of the present invention;
> FIG. 2 is a schematic view of an application environment for selecting a probability model according to an embodiment of the present invention;
> FIG. 3 is a schematic view of an encoding procedure of a syntax element pred_sp_mode_flag according to an embodiment of the present invention;
> FIG. 4 is a schematic view of an encoding procedure of a syntax element rem_sp_mode according to an embodiment of the present invention;

FIG. 5 is a schematic view of a decoding procedure of a syntax element sop_flag according to an embodiment of the present invention;

FIG. 6 is a schematic view of a decoding procedure of a syntax element pred_sp_mode_flag according to an embodiment of the present invention;

FIG. 7 is a schematic view of a decoding procedure of a syntax element rem_sp_mode according to an embodiment of the present invention;

FIGs. 8A to 8I are schematic views of selection relations between a most probable mode and nine probability models according to an embodiment of the present invention;

FIG. 9 is a schematic structural view of an encoding device according to an embodiment of the present invention;

FIG. 10 is a first schematic structural view of a decoding device according to an embodiment of the present invention; and

FIG. 11 is a second schematic structural view of a decoder according to an embodiment of the present invention.

## DETAILED DESCRIPTION OF THE EMBODIMENTS

The technical solutions of the present invention will be clearly and completely described in the following with reference to the accompanying drawings. It is obvious that the embodiments to be described are only a part rather than all of the embodiments of the present invention. On the basis of the embodiments of the present invention without creative efforts, persons of ordinary skill in the art can derive other embodiments which should fall within the protection scope of the present invention.

In the implementation of the embodiments of the present invention, it is found through a large amount of analysis that double prediction parameter information based on double prediction has a certain statistical law to some extent, and the corresponding statistical law correlates to the same syntax element of adjacent macro blocks or represents a more complex statistical law. In the embodiments of the present invention, the corresponding double prediction parameter information is encoded based on the corresponding statistical law, so as to improve the encoding performance of the double prediction mode.

An encoding scheme based on double prediction according to the embodiments of the present invention includes: obtaining double prediction parameter information in a double prediction procedure; then encoding the double prediction parameter information according to a pre-established probability model, and writing an encoding result into an encoded code stream. The corresponding double prediction parameter information may include various different double prediction parameter information, for example, one or more types of double prediction parameter information of a double prediction mark symbol identifier, a model prediction accuracy flag, or second mode information.

In an embodiment of the present invention, from at least one probability model pre-established for currently encoded double prediction parameter information, a corresponding probability model is determined for the currently encoded double prediction parameter information, so as to encode, according to the determined probability model, the currently encoded double prediction parameter information that is binarized.

In the procedure of determining the corresponding probability model for the currently encoded double prediction parameter information, if the pre-established probability model corresponding to the currently encoded double prediction parameter information is only one probability model, the probability model may directly serve as a probability model corresponding to the currently encoded double prediction parameter information. If the pre-established probability models corresponding to the currently encoded double prediction parameter information are multiple probability models, one probability model may be selected according to a pre-determined policy (for example, a pre-determined method of selecting the probability model according to parameter information of adjacent blocks and/or the current block). For example, the probability model corresponding to the currently encoded double prediction parameter information may be selected by adopting one or more of the following methods correspondingly:

(1) when one type of the double prediction parameter information in the double prediction parameter information is a double prediction mark symbol identifier, a corresponding probability model may be selected for a currently encoded double prediction mark symbol identifier from multiple probability models established for the corresponding double prediction mark symbol identifier, according to double prediction mark symbol identifiers of an adjacent left block and an adjacent upper block of a currently encoded macro block, or, according to a macro block type of the currently encoded macro block;

(2) when one type of the double prediction parameter information in the double prediction parameter information is a model prediction accuracy flag, a corresponding probability model my be selected for a currently encoded model prediction accuracy flag from multiple probability models established for the model prediction accuracy flag, according to a double prediction mode that is most probably to be adopted by a currently encoded macro block, or, according to a macro block type of the currently encoded macro block; and

(3) when one type of the double prediction parameter information in the double prediction parameter information is the second mode information, a corresponding probability model may be selected for currently encoded second mode information from multiple probability models established for the second mode information, according to a double prediction mode, which is most probably to be adopted by a currently encoded macro block, and an index of a currently encoded binarized value bin, or, according to a macro block type of the currently encoded macro block.

Optionally, in the processing method (3), if the corresponding probability model is selected for the currently encoded second mode information according to the double prediction mode, which is most probably to be adopted by the currently encoded macro block, and the index of the currently encoded binarized value bin, an index of the selected probability model is equal to a value obtained by multiplying a sequence number of the double prediction mode, which is most probably to be adopted by the currently encoded macro block, by three, and adding the index value of the currently encoded binarized value bin.

Correspondingly, a decoding scheme based on double prediction is provided according to the embodiments of the present invention, and the decoding scheme includes: obtaining an encoded code stream corresponding to double prediction parameter information in a double prediction procedure; then decoding the corresponding encoded code stream corresponding to the double prediction parameter information according to a pre-established probability model, and obtaining the double prediction parameter information.

In the decoding procedure of the double prediction parameter information, first, from at least one probability model established for the currently decoded double prediction parameter information, a corresponding probability model is determined for the currently decoded double prediction parameter information; then, the encoded code stream corresponding to the currently decoded double prediction parameter information is decoded according to the determined probability model, so as to obtain the corresponding double prediction parameter information.

Corresponding to an encoding end, at a decoding end, if the pre-established probability model corresponding to the currently encoded double prediction parameter information is only one probability model, the probability model may directly serve as a probability model corresponding to the currently encoded double prediction parameter information. If the pre-established probability models corresponding to the currently encoded double prediction parameter information are multipleprobability models, a probability model corresponding to the currently encoded double prediction parameter information may be selected by adopting one or more of the following methods:

(1) when one type of the double prediction parameter information in the double prediction parameter information is a double prediction mark symbol identifier, a corresponding probability model may be selected for a currently decoded double prediction mark symbol identifier from multiple probability models established for the corresponding double prediction mark symbol identifier, according to double prediction mark symbol identifiers of an adjacent left block and an adjacent upper block of a currently decoded macro block, or, according to a macro block type of the currently decoded macro block;

(2) when one type of the double prediction parameter information in the double prediction parameter information is a model prediction accuracy flag, a corresponding probability model may be selected for a currently decoded model prediction accuracy flag from multiple probability models established for the corresponding model prediction accuracy flag, according to a double prediction mode that is most probably to be adopted by a currently decoded macro block, or, according to a macro block type of the currently decoded macro block; and

(3) when one type of the double prediction parameter information in the double prediction parameter information is second mode information, a corresponding probability model may be selected for a currently decoded second mode information from multiple probability models established for the corresponding second mode information, according to a double prediction mode, which is most probably to be adopted by the currently encoded macro block, and an index of a currently encoded binarized value bin, or, according to a macro block type of the currently decoded macro block.

Optionally, in the processing method (3), if the corresponding probability model is selected for the currently decoded second mode information according to the double prediction mode, which is most probably to be adopted by the currently decoded macro block, and the index of the currently encoded binarized value bin, an index of the selected probability model is equal to a value obtained by multiplying a sequence number of the double prediction mode, which is most probably to be adopted by the currently decoded macro block, by three, and adding an index value of the binarized value bin of the currently decoded macro block.

It can be seen that, according to the embodiments of the present invention, a context-based binary arithmetic encoding technology is adopted to perform the encoding/decoding operation on double prediction parameter information in a double prediction procedure, that is, the encoding/decoding operation is performed based on an established corresponding probability model. In this way, the encoding performance on the double prediction parameter information in the double prediction procedure is effectively improved, and the transmission bandwidth occupied by the encoded code stream is reduced.

For the convenience of understanding the present invention, the specific application of the embodiments of the present invention is described in detail with reference to the accompanying drawings.

**Embodiment 1**

In Embodiment 1, an encoding procedure based on double prediction and a decoding procedure based on double prediction are provided, which are described respectively below.

(I) An encoding procedure based on double prediction

In Embodiment 1, correspondingly, an encoding procedure based on double prediction may include an encoding procedure of a syntax elements sop_flag, an encoding procedure of a syntax element pred_sp_mode_flag, and an encoding procedure of a syntax element rem_sp_mode.

(1) An encoding procedure of the syntax element sop_flag

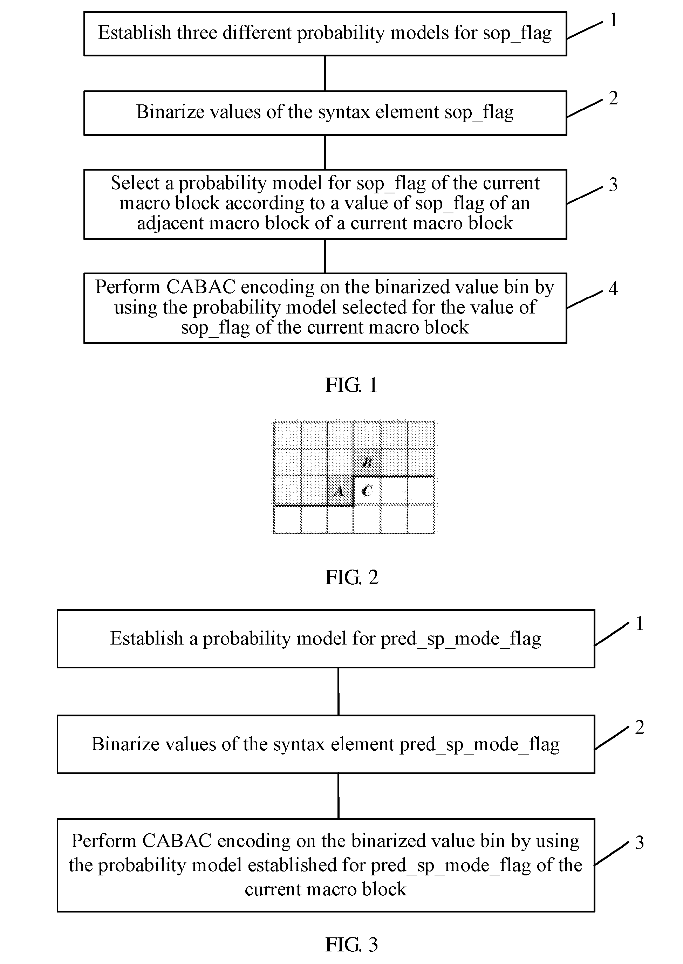

As shown in FIG. 1, the corresponding encoding procedure of the syntax element sop_flag includes the following steps.

In step 1, three different probability models are established for sop_flag, and corresponding probability model initialization is performed, where the probability model after initialization is an equal probability model, that is, m=0 and n=63. The labels of the three probability models are 0, 1, 2, and corresponding m and n are a group of parameters for determining a most probable symbol MPS and the probability of the most probable symbol in model initialization, and the most probable symbol MPS (that is, a large probability symbol) and the probability of the most probable symbol are basic parameters of the probability model.

In step 2, the values of the syntax element sop_flag are binarized; as the values of the syntax element sop_flag are 0 or 1, binarization processing is not needed, if sop_flag=0, a binarized value bin=0, and if sop_flag=1, bin=1.

In step 3, according to a value of sop_flag of an adjacent macro block of a current macro block, a corresponding probability model is selected for sop_flag of the current macro block.

Specifically, as shown in FIG. 2, a probability model of sop_flag of a current macro block C may be selected according to values of sop_flag of an adjacent left macro block A and an adjacent upper macro block B of the current macro block C, and the corresponding selection equation may be:

$$\text{Context\_sop\_flag}(C) = \text{sop\_flag}(A) + \text{sop\_flag}(B);$$

where Context_sop_flag(C) represents a probability model of arithmetic encoding/decoding that the current macro block C adopts; sop_flag(x) represents a value of sop_flag of a macro block x, and if the macro block x is unavailable, sop_flag(x)=0. Specifically, if sop_flag of the macro block A and sop_flag of the macro block B are 0, a probability model 0 is selected; if sop_flag of the macro block A is 0, and sop_flag of the macro block B is 1, a probability model 1 is selected; if sop_flag of the macro block A is 1, and sop_flag of the macro block B is 0, the probability model 1 is selected; and if sop_flag of the macro block A and sop_flag of the macro block B are 1, a probability model 2 is selected.

In step 4, by using the probability model selected for the value of sop_flag of the current macro block, CABAC encoding is performed on the binarized value bin obtained in step 2.

(2) An encoding procedure of the syntax element pred_sp_mode_flag

If sop_flag=1, the syntax element pred_sp_mode_flag exists. At this time, the syntax element pred_sp_mode_flag needs to be encoded.

As shown in FIG. 3, the corresponding encoding procedure includes the following steps.

In step 1, a probability model is established for pred_sp_mode_flag, and corresponding probability model initialization is performed, where the probability model after initialization is an equal probability model, that is, m=0 and n=63.

In step 2, values of the syntax element pred_sp_mode_flag are binarized.

As the values of the syntax element pred_sp_mode_flag are 0 or 1, binarization processing is not needed, if pred_sp_mode_flag=0, binarized value bin=0, and if pred_sp_mode_flag=1, bin=1.

In step 3, by using the probability model established for the current macro block, CABAC encoding is performed on the binarized value bin obtained in step 2.

(3) An encoding procedure of the syntax element rem_sp_mode

If pred_sp_mode_flag=0, the syntax element rem_sp_mode exists. At this time, the syntax element rem_sp_ mode needs to be encoded.

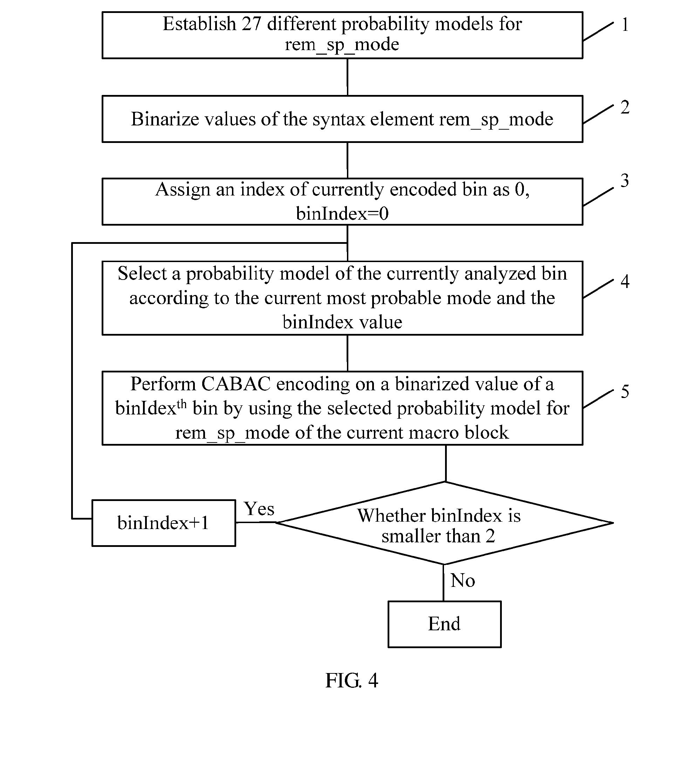

As shown in FIG. 4, the corresponding encoding procedure may include the following steps.

In step 1, 27 different probability models are established for rem_sp_mode, and corresponding probability model initialization is performed, where the probability model after initialization is an equal probability models, that is, m=0 and n=63. Labels of the 27 probability models are set to be 0-26 respectively.

In step 2, as the value of the syntax element rem_sp_mode is a ramdom number among numbers 0-7, binarization processing needs to be performed on the ramdom number among numbers 0-7.

Specifically, fixed-length binarization may be adopted for the binarization processing, for example, 0-000 (that is, a fixed length of the binarization corresponding to the value 0 of the syntax element is 000), 1-001, 2-010, 3-011, 4-100, 5-101, 6-110, and 7-111. For example, if rem_sp_mode=7, the corresponding binarized value bin is 111.

In step 3, an index of currently encoded bin is assigned as 0, that is, binIndex=0.

In step 4, a probability model of the currently analyzed bin is selected according to the current most probable mode and the currently analyzed binIndex, and the corresponding selection equation may be:

$$\text{Context\_bin(binIndex, mostProbableMode)} = \text{mostProbableMode} \times 3 + \text{binIndex};$$

where, Context_bin (C) represents a probability model of arithmetic encoding/decoding that the currently analyzed bin may adopt; mostProbableMode represents a most probable mode, which is configured to perform directivity determination on a predictive value of a current motion compensation block and determine the most probable mode according to the directivity determination result; if the most probable mode mostProbableMode is 5, and a third bin needs to be encoded, that is, binIndex=2, a $(5 \times 3)+2=17$th probability model may be selected as the probability model that needs to be adopted for encoding the syntax element rem_sp_mode of the current macro block. For example, mostProbableMode is 5, the value of rem_sp_mode is 7, and the corresponding binarized value of 7 is 111 (corresponding to a bin 2, a bin 1, and a bin 0), and the probability models selected for the bin 2, the bin 1, and the bin 0 are 17, 16, 15 respectively.

In step 5, by using the selected probability model that needs to be adopted for encoding the syntax element rem_sp_mode of the current macro block, CABAC encoding is performed on a binIdex[th] bin.

At this time, if binIndex is smaller than 2 (if binIndex is equal to 2, it represents that three bins have been encoded), the procedure returns to step 4, and 1 is added to the value of the current binIndex.

(II) A decoding procedure based on double prediction

In Embodiment 1, the corresponding decoding procedure based on double prediction may include a decoding procedure of the syntax element sop_flag, a decoding procedure of the syntax element pred_sp_mode_flag, and a decoding procedure of the syntax element rem_sp_mode.

(1) A decoding procedure of the syntax element sop_flag

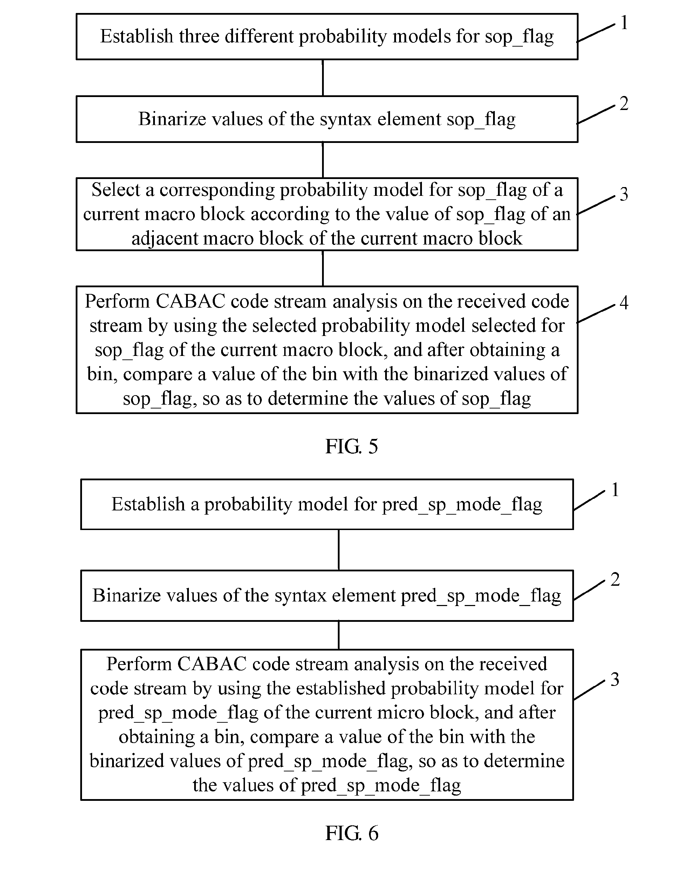

As shown in FIG. 5, the decoding procedure of the syntax element sop_flag includes the following steps.

In step 1, three different probability models are established for sop_flag, and corresponding probability model initialization is performed, where the probability model after initialization is an equal probability model, that is, m=0 and n=63. Labels of the three probability models are set to be: 0, 1, and 2 respectively.

In step 2, the values of the syntax element sop_flag are binarized; as the values of the syntax element sop_ flag are 0 or 1, binarization processing is not needed.

In step 3, according to a value of sop_flag of an adjacent macro block of a current macro block, a corresponding probability model is selected for sop_flag of the current macro block.

Specifically, as shown in FIG. 2, a probability model of sop_flag of a current macro block C may be selected according to values of sop_flag of an adjacent left macro block A and an adjacent upper macro block B of the current macro block C, and the corresponding selection equation may be:

$$\text{Context\_sop\_flag(C)} = \text{sop\_flag(A)} + \text{sop\_flag(B)};$$

where Context_sop_flag(C) represents a probability model of arithmetic encoding/decoding that the current macro block C adopts; sop_flag(x) represents a value of sop_flag of a macro block x; and if the macro block x is unavailable, sop_flag(x)=0. For example, when sop_flag of the macro block A and sop_flag of the macro block B are 0, the probability model 0 is selected; if sop_flag of the macro block A is 0, and sop_flag of the macro block B is 1, the probability model 1 is selected; if sop_flag of the macro block A is 1, and sop_flag of the macro block B is 0; the probability model 1 is selected; and if sop_flag of the macro block A and sop_flag of the macro block B are 1, the probability model 2 is selected.

In step 4, by using the probability model selected in step 3, CABAC code stream analysis is performed on the received code stream to obtain a bin, and a value of the bin is compared with the binarized values of sop_flag. At this time, if bin=0, the sop_flag of the current macro block is 0; otherwise, sop_flag=1.

(2) A decoding procedure of the syntax element pred_sp_mode_flag

If sop_flag=1 in the code stream, the syntax element pred_sp_mode_flag exists in the code stream, and the corresponding syntax element pred_sp_mode_flag needs to be decoded.

As shown in FIG. 6, the corresponding decoding procedure includes the following steps.

In step 1, a probability model is established for pred_sp_mode_flag, and corresponding probability model initialization is performed, where the probability model after initialization is an equal probability model, that is, m=0 and n=63.

In step 2, the values of the syntax element pred_sp_mode_flag are binarized.

As the values of the syntax element pred_sp_mode_flag are 0 or 1, binarization processing is not needed.

In step 3, by using the selected probability model, CABAC code stream analysis is performed on the received code stream to obtain a bin, and a value of the bin obtained from the code stream is compared with the binarized values of the syntax element pred_sp_mode_flag in step 2. If bin=0, the pred_sp_mode_flag of the current macro block is 0; otherwise, pred_sp_mode_flag=1.

(3) A decoding procedure of the syntax element rem_sp_mode

If the pred_sp_mode_flag=0 in the code stream, the syntax element rem_sp_mode exists in the code stream, and at this time, the syntax element rem_sp_mode needs to be decoded.

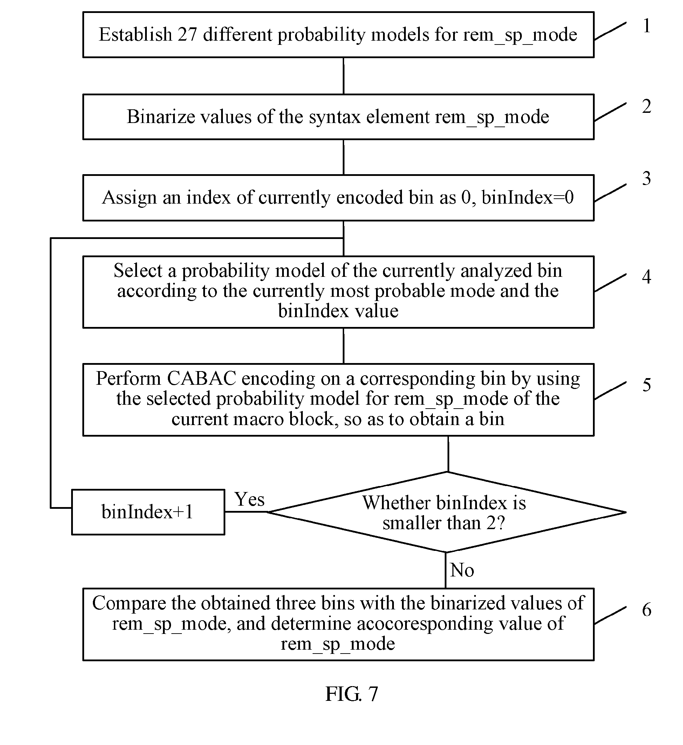

As shown in FIG. 7, the corresponding decoding procedure includes the following steps.

In step 1, 27 different probability models are established for rem_sp_mode, and corresponding probability model initialization is performed, where the probability model after initialization is an equal probability model, that is, m=0 and n=63. Labels of the 27 probability models are set to be 0-26 respectively.

In step 2, the value of the syntax element rem_sp_mode is binarized.

As the values of the syntax element rem_sp_mode are ramdom numbers among the numbers 0-7, binarization processing needs to be performed on the ramdom numbers among the numbers 0-7. Specifically fixed-length binarization may be adopted, for example, 0-000 (when the value of the syntax element rem_sp_mode is 0, the corresponding binarized value bin=000), 1-001, 2-010, 3-011, 4-100, 5-101, 6-110, and 7-111.

In step 3, an index of a currently decoded bin is assigned as 0, that is, binIndex=0.

In step 4, a probability model of the currently analyzed bin is selected according to the current most probable mode and the currently analyzed binIndex.

Specifically, the corresponding selection equation may be:

$$\text{Context\_bin}(\text{binIndex}, \text{mostProbableMode}) = \text{mostProbableMode} \times 3 + \text{binIndex};$$

where, Context_bin (C) represents a probability model of arithmetic encoding/decoding that the currently analyzed bin may adopt; mostProbableMode represents a most probable mode. If the most probable mode is 5, and a third bin needs to be encoded, a $(5 \times 3)+2=17^{th}$ probability model may be selected.

In step 5, by using the probability model selected in step 4, CABAC code stream analysis of the corresponding bins is performed to obtain a bin.

If binIndex is smaller than 2 (if binIndex is equal to 2, it represents that three bins have been analyzed), the procedure returns to step 4, and at the same time, 1 is added to binIndex; otherwise, step 6 is performed.

In step 6, the obtained three bins are compared with the values obtained through binarization of the numbers 0-7 in step 2, and rem_sp_mode is the value that has the same binarized value as the three bins. If the values of the three bins are 001, it is determined that the value of the corresponding rem_sp_mode is 1; if the values of the three bins are 101, it is determined that the value of the corresponding rem_sp_mode is 5, and so on. Specifically, the value of the corresponding rem_sp_mode can be determined according to the corresponding relation between the value of the syntax element rem_sp_mode and the corresponding binarized value bin in step 2.

**Embodiment 2**

In Embodiment 2, an encoding procedure based on double prediction and a decoding procedure based on double prediction are provided, which are described respectively below.

(I) An encoding procedure based on double prediction

In Embodiment 2, the corresponding encoding procedure based on double prediction may include an encoding procedure of a syntax element sop_flag, an encoding procedure of a syntax element pred_sp_mode_flag, and an encoding procedure of a syntax element rem_sp_mode.

(1) An encoding procedure of the syntax element sop_flag

The encoding procedure of the syntax element sop_flag includes the following steps.
In step 1, four different probability models are established for sop_flag, and the corresponding four probability models are initialized, where the probability models after initialization are m=23, n=33, m=23, n=2, m=34, n=0, m=21, and n=0. Labels of the four probability models are set to be: 0, 1, 2, and 3 respectively.
In step 2, the values of the syntax element sop_flag are binarized.
As the values of the syntax element sop_flag are 0 or 1, binarization processing is not needed. Specifically, if sop_flag=0, the binarized value bin=0, and if sop_flag=1, bin=1.
In step 3, according to a value of sop_flag of an adjacent macro block of a current macro block, a probability model that needs to be adopted for encoding is selected for sop_flag of the current macro block.
Specifically, a probability model of sop_flag of a current macro block C may be selected according to values of sop_flag of an adjacent left macro block A and an adjacent upper macro block B of the current macro block C. If sop_flag of the macro block A and sop_flag of the macro block B are 0, a probability model 0 is selected; if sop_flag of the macro block A is 0, and sop_flag of the macro block B is 1, a probability model 1 is selected; if sop_flag of the macro block A is 1, and sop_flag of the macro block B is 0, the probability model 2 is selected; and if sop_flag of the macro block A and sop_flag of the macro block B are1, a probability model 3 is selected.
In step 4, by using the probability model selected in step 3, CABAC encoding is performed on the binarized value bin obtained in step 2.

(2) An encoding procedure of the syntax element pred_sp_mode_flag

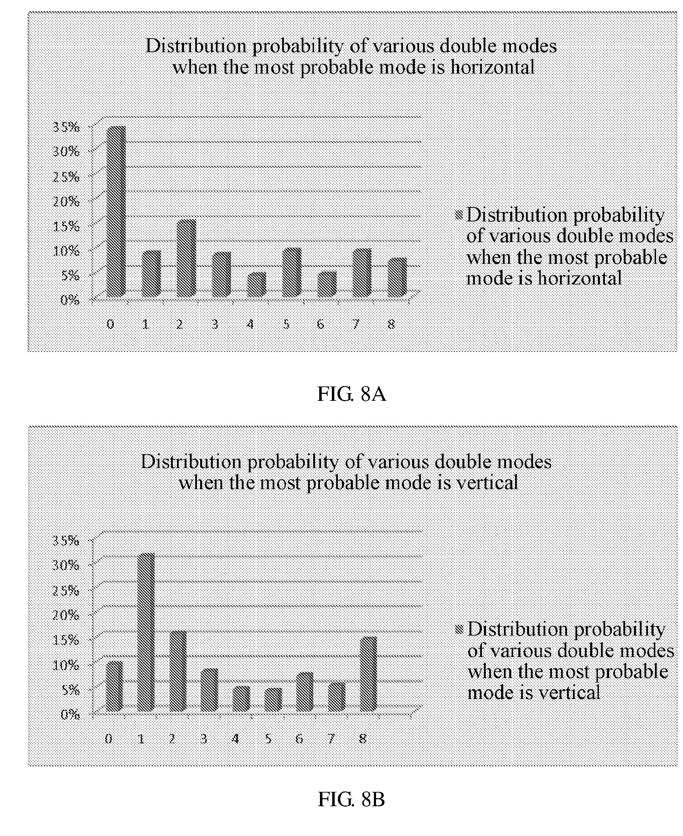

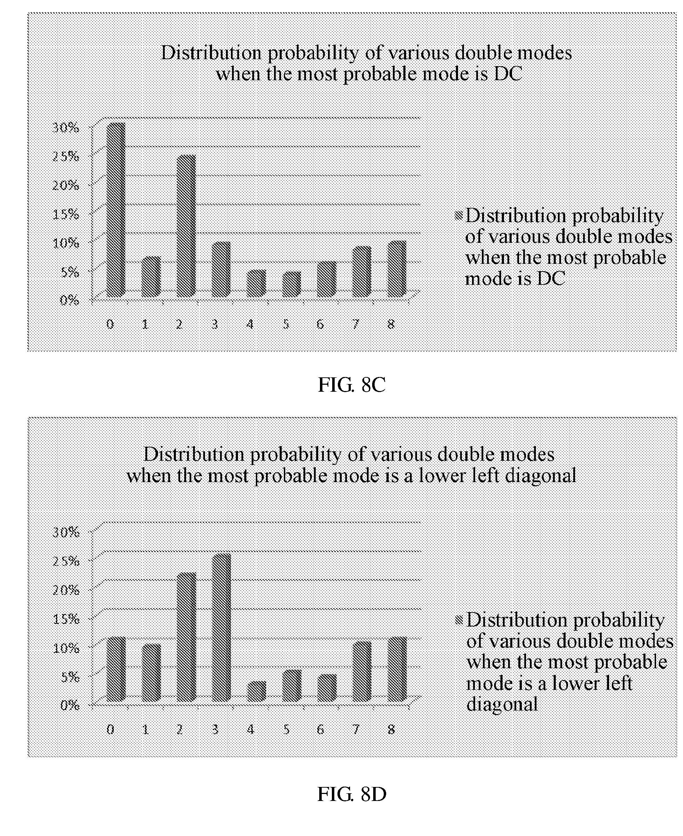

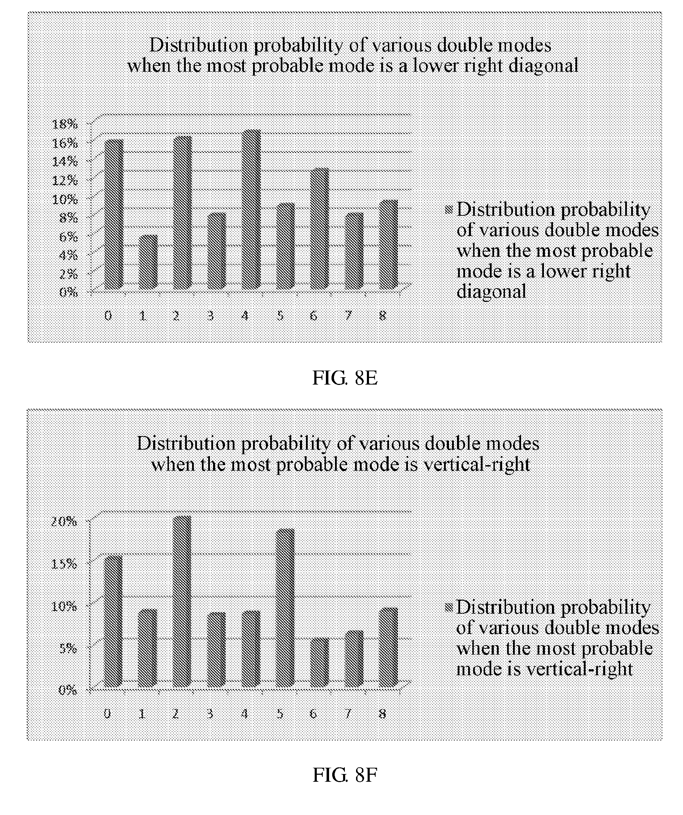

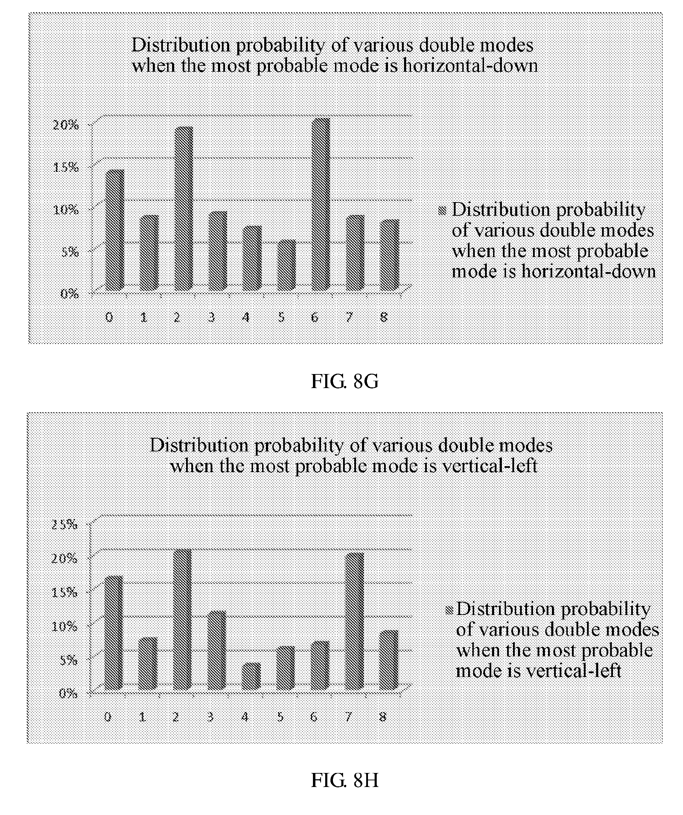

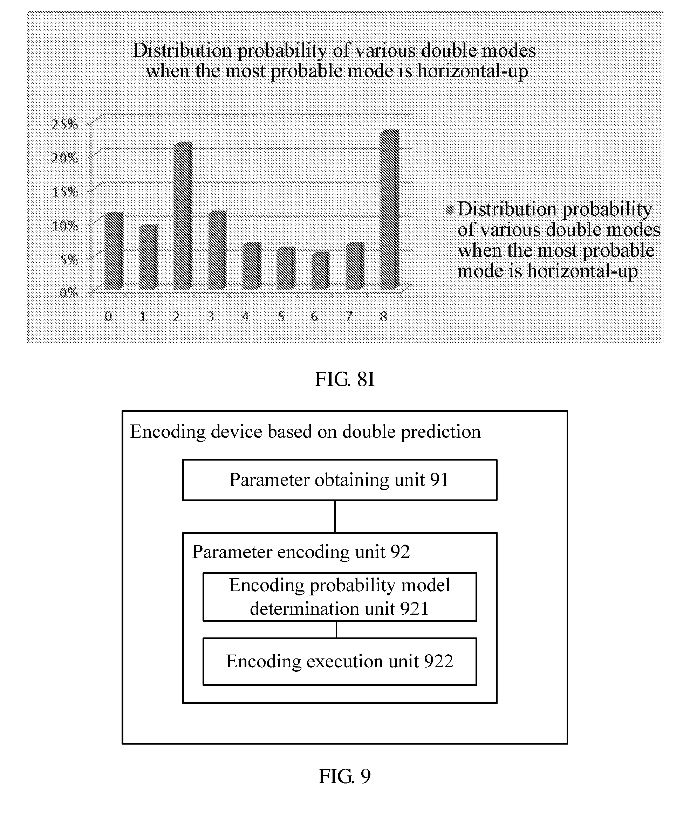

If sop_flag=1, the syntax element pred_sp_mode_flag exists, and at this time, the syntax element pred_sp_mode_flag needs to be encoded, and the corresponding encoding procedure includes the following steps.
In step 1, nine probability models are established for pred_sp_mode_flag, and the corresponding nine probability models are initialized, where the probability model after initialization is an equal probability model, that is, m=0 and n=63. Labels of the nine probability models are set to be 0-8 respectively.
In step 2, the values of the syntax element pred_sp_mode_flag are binarized.
As the values of the syntax element pred_sp_mode_flag are 0 or 1, binarization processing is not needed. At this time, if pred_sp_mode_flag=0, the binarized value bin=0; and if pred_sp_mode_flag=1, bin=1.
In step 3, a probability model is selected according to a most probable mode of a current double prediction mode.
For example, the selection relation between the most probable mode and the nine probability models is as shown in FIGs. 8A to 8I: if the most probable mode is horizontal, the probability model 0 is selected; if the most probable mode is vertical, the probability model 1 is selected; if the most probable mode is DC (vertical), the probability model 2 is selected; if the most probable mode is a lower left diagonal (that is, under a left diagonal), the probability model 3 is selected; if the most probable mode is a lower right diagonal (that is, under a right diagonal), a probability model 4 is selected; if the most probable mode is vertical-right, a probability model 5 is selected; if the most probable mode is horizontal-down, a probability model 6 is selected; if the most probable mode is vertical-left, a probability model 7 is selected; and if the most probable mode is horizontal-up (that is, upper), a probability model 8 is selected. Or, the probability model may be selected according to other pre-determined methods.
In step 4, by using the probability model selected in step 3, CABAC encoding is performed on the binarized value bin in step 2.

(3) An encoding procedure of the syntax element rem_sp_mode

If pred_sp_mode_flag=0, the syntax element rem_sp_mode exists, and at this time, the syntax element rem_sp_mode needs to be encoded, and the corresponding encoding procedure includes the following steps.

In step 1, a probability model is established for rem_sp_mode, and corresponding probability model initialization is performed, where the probability model after initialization is m=3 and n=40.

In step 2, the value of the syntax element rem_sp_mode is binarized.

As the values of rem_sp_mode are ramdom numbers among the numbers 0-7, binarization needs to be performed on the ramdom numbers among the numbers0-7. Specifically, unary binarization may be adopted, for example, 0-0 (that is, when the value of the syntax element rem_sp_mode is 0, the corresponding binarized value bin=0), 1-10, 2-110, 3-1110, 4-11110, 5-111110, 6-1111110, 7-11111110.

In step 3, an index of a currently decoded bin is assigned as 0, that is, binIndex=0.

In step 4, by using an established probability model, CABAC encoding is performed on a binIdex[th] binarized value bin.

If the encoding on all the bins obtain in step 2 has not been completed , the procedure returns to step 4, and at the same time, 1 is added to the index of the corresponding bin binIndex.

(II) A decoding procedure based on double prediction

In Embodiment 2, the corresponding decoding procedure based on double prediction may include a decoding procedure of the syntax element sop_flag, a decoding procedure of the syntax element pred_sp_mode_flag, and a decoding procedure of the syntax element rem_sp_mode.

(1) A decoding procedure of the syntax element sop_flag

In step 1, four different probability models are established for sop_flag, and corresponding probability model initialization is performed, where the probability models after initialization are m=23, n=33, m=23, n=2, m=34, n=0, m=21, and n=0. Labels of the four probability models are set to be: 0, 1, 2, and 3 respectively.

In step 2, the values of the syntax element sop_flag are binarized; as the values of the syntax element sop_flag are 0 or 1, binarization processing is not needed.

In step 3, according to a value of sop_flag of an adjacent macro block of a current macro block, a probability model is selected for sop_flag of the current macro block.

Specifically, as shown in FIG. 2, a probability model of sop_flag of a current macro block C may be selected according to values of sop_flag of an adjacent left macro block A and an adjacent upper macro block B of the current macro block C. If sop_flag of the macro block A and sop_flag of the macro block B are 0, the probability model 0 is selected; if sop_flag of the macro block A is 0, and sop_flag of the macro block B is 1, the probability model 1 is selected; if sop_flag of the macro block A is 1, and sop_flag of the macro block B is 0, the probability model 2 is selected; and if sop_flag of the macro block A and sop_flag of the macro block B are 1, a probability model 3 is selected.

In step 4, by using the probability model selected in step 3, CABAC code stream analysis is performed on the received code stream to obtain a bin, and a value of the bin is compared with the binarized values of sop_flag determined in step 2, and if bin=0, the sop_flag of the current macro block is 0; otherwise, sop_flag=1.

(2) A decoding procedure of the syntax element pred_sp_mode_flag

If sop_flag=1 in the code stream, the syntax element pred_sp_mode_flag exists in the corresponding code stream, and the syntax element pred_sp_mode_flag needs to be decoded. The corresponding decoding procedure includes the following steps.

In step 1, nine probability models are established for pred_sp_mode_flag, and corresponding probability model initialization is performed, where the probability model after initialization is an equal probability model, that is, m=0 and n=63. Labels of the nine probability models are set to be: 0-8 respectively.

In step 2, values of the syntax element pred_sp_mode_flag are binarized; as the values of the syntax element pred_sp_mode_flag are 0 or 1, binarization processing is not needed.

In step 3, a probability model is selected by using a most probable mode of a current double prediction mode.

For example, if the most probable mode is horizontal, the probability model 0 is selected; if the most probable mode is vertical, the probability model 1 is selected; if the most probable mode is DC (vertical), the probability model 2 is selected; if the most probable mode is a lower left diagonal, the probability model 3 is selected; if the most probable mode is a lower right diagonal, a probability model 4 is selected; if the most probable mode is vertical-right, a probability model 5 is selected; if the most probable mode is horizontal-down, a probability model 6 is selected; if the most probable mode is vertical-left, a probability model 7 is selected; and if the most probable mode is horizontal-up, a probability model 8 is selected.

In step 4, by using the probability model selected in step 3, CABAC code stream analysis is performed to obtain a bin, and a value of the bin is compared with the binarized values of pred_sp_mode_flag determined in step 2, and if bin=0, pred_sp_mode_flag of the current macro block is 0; otherwise, pred_sp_mode_flag=1.

(3) A decoding procedure of the syntax element rem_sp_mode

If pred_sp_mode_flag=0 in the code stream, the syntax element rem_sp_mode exists in the code stream. The syntax element rem_sp_mode needs to be decoded, and the corresponding decoding procedure includes the following steps.

In step 1, a probability model is established for rem_sp_mode, and corresponding probability model initialization is performed, where the probability model after initialization is m=3 and n=40.

In step 2, as the values of rem_sp_mode are ramdom numbers among the numbers 0-7, binarization needs to be performed on the ramdom numbers among the numbers 0-7.

Specifically, unary binarization may be adopted, for example, 0-0, 1-10 (that is, when the value of rem_sp_mode is 1, the corresponding binarized value bin=10), 2-110, 3-1110, 4-11110, 5-111110, 6-1111110,7-11111110.

In step 3, an index of a currently decoded bin is assigned as 0, that is, binIndex=0.

In step 4, by using the probability model established in step 1, CABAC code stream analysis of the current bin is performed to obtain a bin. If values of all the decoded bins are combined to be equal to any one of the values obtained by binarizing the numbers 0-7, rem_sp_mode is assigned as the value; otherwise, CABAC code stream analysis is performed for a next bin, and at the same time, 1 is added to binIndex.

For example, if the bin decoded is 0, and three bins previously decoded are 1, rem_sp_mode=3 may be determined according to the result of the binarization processing in step 2.

**Embodiment 3**

In Embodiment 3, an encoding procedure based on double prediction and decoding procedure based on double prediction are provided, which are described respectively below.

(I) An encoding procedure based on double prediction

In Embodiment 3, the corresponding encoding procedure based on double prediction may include an encoding procedure of a syntax element sop_flag, an encoding procedure of a syntax element pred_sp_mode_flag, and an encoding procedure of a syntax element rem_sp_mode.

(1) An encoding procedure of the syntax element sop_flag

The encoding procedure of the syntax element sop_flag includes the following steps.

In step 1, two different probability models are established for sop_flag, and corresponding probability model initialization is performed, where the probability models after initialization are m=0, n=63, m=21, n=0. Labels of the two probability models are set to be 0 and 1 respectively.

In step 2, the values of the syntax element sop_flag are binarized.

As the values of the syntax element sop_flag are 0 or 1, binarization is not needed, and correspondingly, if sop_flag=0, the binarized value bin=0, and if sop-flag=1, bin=1.

In step 3, a probability model is selected according to a macro block type mb_type of a current macro block.

For example, if the macro block type is P16x16 or P8x8, a probability model 0 is selected, and if the macro block type is P16x8 or P8x16, a probability model 1 is selected.

In step 4, by using the probability model selected in step 3, CABAC encoding is performed on the binarized value bin obtained in step 2.

(2) An encoding procedure of the syntax element pred_sp_mode_flag

If sop_flag=1, the syntax element pred_sp_mode_flag exists, and at this time, the syntax element pred_sp_mode_flag needs to be encoded, and the corresponding encoding procedure includes the following steps.

In step 1, three probability models are established for pred_sp_mode_flag, and corresponding probability model initialization are performed, where the probability models after initialization are m=0, n=63, m=12, n=23, m=17, and n=0. Labels of the three probability models are set to be 0-2 respectively.

In step 2, the values of the syntax element pred_sp_mode_flag are binarized.

As the values of the syntax element pred_sp_mode_flag are 0 or 1, binarization processing is not needed, and correspondingly, if pred_sp_mode_flag=0, the binarized value bin=0, and if pred_sp_mode_flag=1, bin=1.

In step 3, a probability model is selected by using a current macro block type mb_type.

For example, if the macro block type is P16x16, the probability model 0 is selected; if the macro block type is P16x8 or P8x16, the probability model 1 is selected; and if the macro block type is P8x8, the probability model 2 is selected.

In step 4, by using the probability model selected in step 3, CABAC encoding is performed on the binarized value bin in step 2.

(3) An encoding procedure of the syntax element rem_sp_mode

If pred_sp_mode_flag=0, the syntax element rem_sp_mode exists, and at this time, the syntax element rem_sp_mode needs to be encoded, and the corresponding encoding procedure includes the following steps.

In step 1, three probability models are established for rem_sp_mode, and corresponding probability model initialization are performed, where the probability models after initialization are m=0, n=63, m=12, n=23, m=17, and n=0.

In step 2, the values of the syntax element rem_sp_mode are binarized.

As the values of the syntax element rem_sp_mode are ramdom numbers among the numbers 0-7, binarization processing needs to be performed on the ramdom numbers among the numbers 0-7. Specifically, 0-order exponential-Golomb code may be adopted for corresponding binarization processing, for example, 0-1 (that is, when the value of the syntax element rem_sp_mode is 0, the corresponding binarized value bin=1), 1-010, 2-011, 3-00100, 4-00101, 5-00110, 6-00111, and 7-0001000.

In step 3, an index of a currently encoded bin is assigned as 0, that is, binIndex=0.

In step 4, a probability model is selected by using a current macro block type mb_type.

For example, if the macro block type is P16x16, the probability model 0 is selected; if the macro block type is P16x8 or P8x16, the probability model 1 is selected; and if the macro block type is P8x8, the probability model 2 is selected.

In step 5, by using the probability model selected in step 4, CABAC encoding is performed on a binIdex[th] binarized value bin.

If the encoding on all the binarized value bins obtained in step 2 has not been completed, the procedure returns to step 4, and at the same time, 1 is added to the index of the bin binIndex.

(II) A decoding procedure based on double prediction

In Embodiment 3, the corresponding decoding procedure based on double prediction may include a decoding procedure of the syntax elements sop_flag, a decoding procedure of the syntax element pred_sp_mode_flag, and a decoding procedure of the syntax element rem_sp_mode.

(1) A decoding procedure of the syntax element sop_flag

The decoding procedure of the syntax element sop_flag includes the following steps.

In step 1, two different probability models are established for sop_flag, and corresponding probability model initialization is performed, where the probability models after initialization are m=0, n=63, m=21, and n=0. Labels of the two probability models are set to be 0 and 1 respectively. In step 2, the values of the syntax element sop_flag are binarized, and as the values of the syntax element sop_flag are 0 or 1, binarization processing is not needed.

In step 3, a probability model is selected according to a macro block type mb_type of a current macro block.

For example, if the macro block type is P16x16 or P8x8, the probability model 0 is selected; and if the macro block type is P16x8 or P8x16, the probability model 1 is selected.

In step 4, CABAC code stream analysis is performed by using the probability model selected in step 3 to obtain a bin, and a value of the bin is compared with the binarized values of sop_flag determined in step 2, and if bin=0, sop_flag of the current macro block is 0; otherwise, sop_flag=1.

(2) A decoding procedure of the syntax element pred_sp_mode_flag

If sop_flag=1 in the code stream, the syntax element pred_sp_mode_flag exists in the corresponding code stream, and at this time, the syntax element pred_sp_mode_flag needs to be decoded, and the corresponding decoding procedure includes the following steps.

In step 1, three probability models are established for pred_sp_mode_flag, and corresponding probability model initialization is performed, where the probability models after initialization are m=0, n=63, m=12, n=23, m=17, and n=0. Labels of the three probability models are set to be 0-2 respectively.

In step 2, the values of the syntax element pred_sp_mode_flag are binarized, and as the values of the syntax element pred_sp_mode_flag are 0 or 1, binarization processing is not needed.

In step 3, a probability model is selected by using a current macro block type mb_type.

For example, if the macro block type is P16x16, the probability model 0 is selected, if the macro block type is P16x8 or P8x16, the probability model 1 is selected; and if the macro block type is P8x8, the probability model 2 is selected.

In step 4, CABAC code stream analysis is performed by using the probability model selected in step 3 to obtain a bin, and a value of the bin is compared with the binarized values of pred_sp_mode_flag determined in step 2, and if bin=0, pred_sp_mode_flag of the current macro block is 0; otherwise, pred_sp_mode_flag=1.

(3) A decoding procedure of the syntax element rem_sp_mode

If pred_sp_mode_flag=0 in the code stream, the syntax element rem_sp_mode exists in the corresponding code stream, the syntax element rem_sp_mode needs to be decoded, and the corresponding decoding procedure includes the following steps.

In step 1, three probability models are established for rem_sp_mode, and corresponding probability model initialization is performed, where the probability models after initialization are m=0, n=63, m=12, n=23, m=17, and n=0.

In step 2, the values of the syntax element rem_sp_mode are binarized.

As the values of rem_sp_mode are ramdom numbers among the numbers 0-7, binarization processing needs to be performed on the ramdom numbers among the numbers 0-7. Specifically, 0-order exponential-Golomb code may be adopted for corresponding binarization processing, for example, 0-1 (that is, when the value of the syntax element rem_sp_mode is 0, the corresponding binarized value bin=1), 1-010, 2-011, 3-00100, 4-00101, 5-00110, 6-00111, and 7-0001000.

In step 3, an index of a currently decoded bin is assigned as 0, that is, binIndex=0.

In step 4, a probability model is selected by using a current macro block type mb_type. For example, if the macro block type is P16x16, the probability model 0 is selected; if the macro block type is P16x8 or P8x16, the probability model 1 is selected; and if the macro block type is P8x8, the probability model 2 is selected.

In step 5, by using the probability model selected in step 4, CABAC code stream analysis is performed on the current bin.

Specifically, after obtaining a bin, if all the decoded bins are combined to be equal to any one of the values obtained by binarizing the numbers 0-7, the value of rem_sp_mode is the value of rem_sp_mode corresponding to the value obtained through binarization; otherwise, CABAC code stream analysis of a next bin is performed, and at the same time, 1 is added to binIndex. For example, if the bin decoded is 1, and the bin previously decoded is 0010, the corresponding rem_sp_mode=4.

In the embodiments of the present invention, as CABAC encoding/decoding methods are adopted to perform the encoding/decoding operation on the corresponding double prediction parameter information, the statistical law of the syntax elements in the double prediction parameter information can be effectively used to perform adaptive encoding/decoding, that is, in the encoding/decoding procedure, the corresponding context model (that is, the probability model) is designed according to the statistical law of the syntax elements, the encoding/decoding operation is performed according to the corresponding probability model, thereby effectively improving the encoding performance of the double prediction technology and the encoding efficiency.

Beneficial technical effects generated through application of embodiments of the present invention are further described with reference to two sets of experimental results.

(1) Test conditions and performance results of a first set of experiments

Reference software: JM11.0 KTA2.1, which is reference software in H.264/AVC key technology field;
Prediction encoding structure: IPPP, IBBP, IbBbBbBbP;
Rate-Distortion Optimization is on;
QP of I (quantization parameter of frame I): 22, 27, 23, 27;
QP of P (quantization parameter of frame P): 23, 28, 33, 38;
QP of B (quantization parameter of frame B): 24, 29, 34, 39;
Entropy coding: CABAC ON, CAVLC ON;
Weighted prediction is off; and
as for the other test settings, refer to High Profile settings in the existing VCEG-AH10. Experimental results in the table below are improvements after comparison of the SOP (double prediction) performance in the present invention and the JM11.0 KTA2.1 performance.

| | HPIPPP | | HPIBBP | | HP IbBbBbBbP | |
|---|---|---|---|---|---|---|
| | BD_PSNR | BD_Bitrate | BD_PSNR | BD_Bitrate | BD_PSNR | BD_Bitrate |
| BigShips | 0.09 | -3.19 | 0.08 | -2.82 | 0.09 | -3.37 |
| City | 0.12 | -3.94 | 0.09 | -3.00 | 0.09 | -2.73 |
| Crew | 0.22 | -7.82 | 0.22 | -8.35 | 0.22 | -8.17 |
| Night | 0.09 | -2.33 | 0.06 | -1.84 | 0.06 | -1.72 |
| ShuttleStart | 0.20 | -5.63 | 0.26 | -6.71 | 0.25 | -6.92 |
| Average of HD | 0.14 | -4.58 | 0.14 | -4.54 | 0.14 | -4.59 |

In the table above, the first column represents different application environments, HPIPPP, HPIBBP, and HP IbBbBbBbP represent H.264/AVC high grade IPPP, IBBP, IbBbBbBbP encoding structure, BDPSNR represents improvement of Peak Signal to Noise Ratio (PSNR) at Average Bit-Rate (ABR), and BD_Bitrate represents the saving of the average PSNR bit-rate.

(2) Test conditions and performance results of a second set of experiments

Reference software: JM11.0 KTA2.1;
Prediction encoding structure: IPPP;
Rate-Distortion Optimization is on;
QP of I: 22, 27, 23, 27;
QP of P: 23, 28, 33, 38;
Entropy coding: CABAC ON; and

as for the other test settings, refer to High Profile settings in the existingVCEG-AH10. The test sequence is HD (high resolution) sequence Crew, the test length is 5 frames, 20878 inter-frame macro blocks exist in total, and double prediction can only be adopted for inter-frame macro blocks.

In the encoding procedure of three syntax elements relevant to double prediction, VLC encoding and CABAC encoding are adopted respectively, and the corresponding encoding bit numbers are as shown in the table below.

| Encoding bit number | sop_flag | pred_sp_mode_flag and rem_sp_mode |
|---|---|---|
| VLC | 20878 | 24387 |
| CABAC | 3647 | 23596 |
| Saved bit number% | 82.5% | 3.2% |
| average saving | | 39.8% |

It can be seen from the table above that, by adopting CABAC to encode the corresponding double prediction syntax element, the bit number after encoding can be effectively reduced, thereby improving the encoding performance and saving the transmission bandwidth.

Persons of ordinary skill in the art should understand that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM) or a random access memory (RAM).

An encoding device based on double prediction is further provided according to embodiments of the present invention. As shown in FIG. 9, the implementation structure of the device includes:

a parameter obtaining unit 91, configured to obtain double prediction parameter information in a double prediction procedure, where the corresponding double prediction parameter information may be, but is not limited to, one or more types of double prediction parameter information of a double prediction mark symbol identifier, a model prediction accuracy flag, or second mode information; and

a parameter encoding unit 92, configured to encode the double prediction parameter information obtained by the parameter obtaining unit 91 according to a pre-established probability model, and write an encoding result into an encoded code stream.

In the device, the corresponding parameter encoding unit 92 may specifically include:

an encoding probability model determination unit 921, configured to determine a corresponding probability model for currently encoded double prediction parameter information from at least one probability model established for the currently encoded double prediction parameter information; and

an encoding execution unit 922, configured to encode, according to the probability model determined by the encoding probability model determination unit 921, the currently encoded double prediction parameter information that is obtained by the parameter obtaining unit 91 and is binarized.

Specifically, if the pre-established probability model corresponding to the currently encoded double prediction parameter information is only one probability model, the corresponding encoding probability model determination unit 921 may directly use the probability model as the probability model corresponding to the currently encoded double prediction parameter information. If the pre-established probability models corresponding to the currently encoded double prediction parameter information are multiple probability models, the encoding probability model determination unit 921 selects a probability model corresponding to the currently encoded double prediction parameter information by adopting one or more of the following methods:

(1) If one type of the double prediction parameter information in the double prediction parameter information is a double prediction mark symbol identifier, the corresponding encoding probability model determination unit 921 selects a corresponding probability model for a currently encoded double prediction mark symbol identifier from multiple probability models established for the double prediction mark symbol identifier, according to double prediction mark symbol identifiers of an adjacent left block and an adjacent upper block of a currently encoded macro block, or, according to a macro block type of the currently encoded macro block;

(2) If one type of the double prediction parameter information in the double prediction parameter information is a model prediction accuracy flag, the corresponding encoding probability model determination unit 921 selects a corresponding probability model for a currently encoded model prediction accuracy flag from multiple probability models established for the model prediction accuracy flag, according to a double prediction mode that is most probably to be adopted by the currently encoded macro block, or, according to a macro block type of the currently encoded macro block; and

(3) if one type of the double prediction parameter information in the double prediction parameter information is second mode information, the corresponding encoding probability model determination unit 921 selects a corresponding probability model for currently encoded second mode information from multiple probability models established for the second mode information, according to a double prediction mode, which is most probably to be adopted by the currently encoded macro block, and an index of a currently encoded binarized value bin, or, according to a macro block type of the currently encoded macro block. Optionally, if the corresponding encoding probability model determination unit 921 selects the corresponding probability model for the currently encoded second mode information according to the double prediction mode, which is most probably to be adopted by the currently encoded macro block, and the index of a currently encoded binarized value bin, an index of the selected probability model is equal to a value obtained by multiplying a sequence number of the double prediction mode, which is most probably to be adopted by the currently encoded macro block, by three, and adding an index value of the currently encoded binarized value bin.

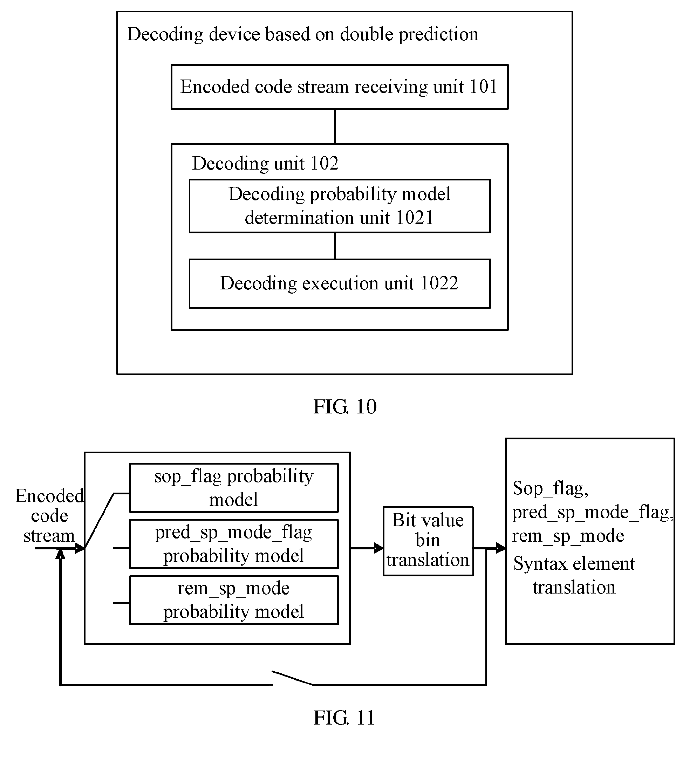

A decoding device based on double prediction is further provided according to embodiments of the present invention. As shown in FIG. 10, the implementation structure of the device includes:

an encoded code stream receiving unit 101, configured to obtain an encoded code stream corresponding to double prediction parameter information in a double prediction procedure; and

a decoding unit 102, configured to decode, according to a pre-established probability model, the encoded code stream corresponding to the double prediction parameter information obtained by the encoded code stream receiving unit 101, so as to obtain the double prediction parameter information.

In the device, the corresponding decoding unit 102 may specifically include:

a decoding probability model determination unit 1021, configured to determine a corresponding probability model for currently decoded double prediction parameter information from at least one probability model established for the currently decoded double prediction parameter information; and

a decoding execution unit 1022, configured to decode, according to the probability model determined by the decoding probability model determination unit, the encoded code stream corresponding to the currently decoded double prediction parameter information obtained by the encoded code stream receiving unit 1021, so as to obtain the double prediction parameter information.

Specifically, corresponding to an encoding end, at a decoding end, if the pre-established probability model corresponding to the currently encoded double prediction parameter information is only one probability model, corresponding decoding probability model determination unit 1021 may directly use the probability model as a probability model corresponding to the currently encoded double prediction parameter information. If the pre-established probability models corresponding to the currently encoded double prediction parameter information are multiple probability models, the corresponding decoding probability model determination unit 1021 may select a probability model corresponding to the currently encoded double prediction parameter information by adopting any one or more of the following methods:

(1) When one type of the double prediction parameter information in the double prediction parameter information is a double prediction mark symbol identifier, the corresponding decoding probability model determination unit 1021 selects a corresponding probability model for a currently decoded double prediction mark symbol identifier from multiple probability models established for the corresponding double prediction mark symbol identifier, according to double prediction mark symbol identifiers of an adjacent left block and an adjacent upper block of a currently decoded macro block, or, according to a macro block type of the currently decoded macro block;

(2) When one type of the double prediction parameter information in the double prediction parameter information is a model prediction accuracy flag, the corresponding decoding probability model determination unit 1021 may select a corresponding probability for a currently decoded model prediction accuracy flag from multiple probability models established for the corresponding model prediction accuracy flag, according to a double prediction mode that is most probably to be adopted by a currently decoded macro block, or, according to a macro block type of the currently decoded macro block; and

(3) When one type of the double prediction parameter information in the double prediction parameter information is second mode information, the corresponding decoding probability model determination unit 1021 may select a corresponding probability model for a currently decoded second mode information from multiple probability models established for the corresponding second mode information, according to a double prediction mode, which is most probably to be adopted by the currently encoded macro block, and an index of a currently encoded binarized value bin, or, according to a macro block type of the currently decoded macro block. Optionally, if the corresponding decoding probability model determination unit 1021 selects the corresponding probability model for the currently decoded second mode information according to the double prediction mode, which is most probably to be adopted by the currently decoded macro block, and an index of a currently encoded binarized value bin, an index of the selected probability model is equal to a value obtained by multiplying a sequence number of the double prediction mode, which is most probably to be adopted by the currently decoded macro block, by three, and adding an index value of a currently decoded binarized value bin.

Furthermore, the decoding device based on double prediction and disposed at the decoding end can be implemented by a corresponding context-adaptive arithmetic decoder that is based on double prediction. As shown in FIG. 11, as for a received encoded code stream, a corresponding sop_flag probability model, a pred_sp_mode_flag probability model, or rem_sp_mode probability model is determined by a corresponding decoding probability model determination unit 1021; then, according to a corresponding probability model, translation processing of a bit value bin (that is, a binarized value) is performed; and finally, according to a translation result of the bit value bin, the syntax elements sop_flag, pred_sp_mode_flag, and rem_sp_mode are translated, that is, corresponding values of the syntax elements sop_flag, pred_sp_mode_flag and rem_sp_mode are determined. Therefore, the decoder may decode and obtain the values of the three syntax elements from the encoded code stream according to the probability models of the double prediction mark symbol identifier sop_flag, the model prediction accuracy flag pred_sp_mode_flag, and the second mode decoding information rem_sp_mode.

An encoding/decoding system is further provided according to embodiments of the present invention, and includes an encoding device based on double prediction and a decoding device based on double prediction mentioned above.

In the device, an implementation scheme based on an established corresponding probability model is adopted to perform the encoding/decoding operation, so that the encoding performance on double prediction parameter information in a double prediction procedure is effectively improved, and the transmission bandwidth occupied by the encoded code stream is reduced.

The above descriptions are merely exemplary embodiments of the present invention, but not intended to limit the protection scope of the present invention. Any modifications, variations or replacements that can be easily derived by those skilled in the art should fall within the protection scope of the present invention. Therefore, the protection scope of the present invention is subject to the appended claims.

**Claims**

1.  An encoding method based on double prediction, comprising:

    obtaining double prediction parameter information in a double prediction procedure; and
    encoding the double prediction parameter information according to a pre-established probability model, and writing an encoding result into an encoded code stream.

2.  The method according to claim 1, wherein the encoding the double prediction parameter information comprises:

    determining a corresponding probability model for the currently encoded double prediction parameter information from at least one probability model established for the currently encoded double prediction parameter information; and
    encoding, according to the determined corresponding probability model, the currently encoded double prediction parameter information after being binarized.

3.  The method according to claim 2, wherein
    when one type of the double prediction parameter information in the double prediction parameter information is a double prediction mark symbol identifier, the determining the corresponding probability model comprises: selecting a corresponding probability model for a currently encoded double prediction mark symbol identifier from at least one probability model established for the double prediction mark symbol identifier, according to double prediction mark symbol identifiers of an adjacent left block and an adjacent upper block of a currently encoded macro block, or, according to a macro block type of the currently encoded macro block;
    and/or,
    when one type of the double prediction parameter information in the double prediction parameter information is a model prediction accuracy flag, the determining the corresponding probability model comprises: selecting a corresponding probability model for a currently encoded model prediction accuracy flag from at least one probability model established for the model prediction accuracy flag, according to a double prediction mode that is most probably to be adopted by a currently encoded macro block, or, according to a macro block type of the currently encoded macro block;
    and/or,
    when one type of the double prediction parameter information in the double prediction parameter information is second mode information, the determining the corresponding probability model comprises: selecting a corresponding probability model for currently encoded second mode information from at least one probability model established for the second mode information, according to a double prediction mode, which is most probably to be adopted by a currently encoded macro block, and an index of a currently encoded binarized value bin, or, according to a macro block type of the currently encoded macro block.

4.  The method according to claim 3, wherein if the corresponding probability model is selected for the currently encoded second mode information according to the double prediction, which is mode most probably to be adopted by the currently encoded macro block, and the index of the currently encoded binarized value bin, an index of the selected probability model is equal to a value obtained by multiplying a sequence number of the double prediction mode, which is most probably to be adopted by the currently encoded macro block, by three, and adding an index value of the currently encoded binarized value bin.

5.  An image encoding device based on double prediction, comprising:

    a parameter obtaining unit, configured to obtain double prediction parameter information in a double prediction procedure; and
    a parameter encoding unit, configured to encode, according to a pre-established probability model, the double prediction parameter information obtained by the parameter obtaining unit, and write an encoding result into an encoded code stream.

6. The device according to claim 5, wherein the parameter encoding unit comprises:

an encoding probability model determination unit, configured to determine a corresponding probability model for currently encoded double prediction parameter information from at least one probability model established for the currently encoded double prediction parameter information; and
an encoding execution unit, configured to encode, according to the probability model determined by the encoding probability model determination unit, the currently encoded double prediction parameter information that is obtained by the parameter obtaining unit and is binarized.

7. The device according to claim 6, wherein
when one type of the double prediction parameter information in the double prediction parameter information is a double prediction mark symbol identifier, the encoding probability model determination unit selects a corresponding probability model for a currently encoded double prediction mark symbol identifier from at least one probability model established for the double prediction mark symbol identifier, according to double prediction mark symbol identifiers of an adjacent left block and an adjacent upper block of a currently encoded macro block, or, according to a macro block type of the currently encoded macro block;
and/or,
when one type of the double prediction parameter information in the double prediction parameter information is a model prediction accuracy flag, the encoding probability model determination unit selects a corresponding probability model for a currently encoded model prediction accuracy flag from at least one probability model established for the model prediction accuracy flag, according to a double prediction mode that is most probably to be adopted by a currently encoded macro block, or, according to a macro block type of the currently encoded macro block;
and/or,
when one type of the double prediction parameter information in the double prediction parameter information is second mode information, the encoding probability model determination unit selects a corresponding probability model for currently encoded second mode information from at least one probability model established for the second mode information, according to a double prediction mode, which is most probably to be adopted by a currently encoded macro block, and an index of a currently encoded binarized value bin, or, according to a macro block type of the currently encoded macro block.

8. The device according to claim 7, wherein if the probability model determination unit selects a corresponding probability model for the currently encoded second mode information according to the double prediction mode, which is most probably to be adopted by the currently encoded macro block, and the index of the currently encoded binarized value bin, an index of the selected probability model is equal to a value obtained by multiplying a sequence number of the double prediction mode, which is most probably to be adopted by the currently encoded macro block, by three, and adding an index value of the currently encoded binarized value bin.

9. An image decoding method based on double prediction, comprising:

obtaining an encoded code stream corresponding to double prediction parameter information in a double prediction procedure;
decoding the encoded code stream corresponding to the double prediction parameter information according to a pre-established probability model, and obtaining the double prediction parameter information.

10. The method according to claim 9, wherein the decoding the double prediction parameter information comprises:

determining a corresponding probability model for the currently decoded double prediction parameter information from at least one probability model established for the currently decoded double prediction parameter information; and
decoding the encoded code stream corresponding to the currently decoded double prediction parameter information according to the determined probability model, and obtaining the double prediction parameter information.

11. The method according to claim 10, wherein
when one type of the double prediction parameter information in the double prediction parameter information is a double prediction mark symbol identifier, the determining the corresponding probability model comprises: selecting a corresponding probability model for a currently decoded double prediction mark symbol identifier from at least one probability model established for the double prediction mark symbol identifier, according to double prediction mark symbol identifiers of an adjacent left block and an adjacent upper block of a currently decoded macro block, or, according to a macro block type of the currently decoded macro block;
and/or,
when one type of the double prediction parameter information in the double prediction parameter information is a model prediction accuracy flag, the determining the corresponding probability model comprises: selecting a corresponding probability model for a currently decoded model prediction accuracy flag from at least one probability model established for the model prediction accuracy flag, according to a double prediction mode that is most probably to be adopted by a currently decoded macro block, or, according to a macro block type of the currently decoded macro block;
and/or,
when one type of the double prediction parameter information in the double prediction parameter information is second mode information, the determining the corresponding probability model comprises: selecting a corresponding probability model for currently decoded second mode information from at least one probability model established for the second mode information, according to a double prediction mode, which is most probably to be adopted by a currently encoded macro block, and an index of a currently encoded binarized value bin, or, according to a macro block type of the currently decoded macro block.

12. The method according to claim 11, wherein if the corresponding probability model is selected for the currently decoded second mode information according to the double prediction, which is mode most probably to be adopted by the currently decoded macro block, and the index of the currently encoded binarized value bin, an index of the selected probability model is equal to a value obtained by multiplying a sequence number of the double prediction mode, which is most probably to be adopted by the currently decoded macro block, by three, and adding an index value of a currently decoded binarized value bin.

13. A decoding device based on double prediction, comprising:

   an encoded code stream receiving unit, configured to obtain an encoded code stream corresponding to double prediction parameter information in a double prediction procedure; and
   a decoding unit, configured to decode, according to a pre-established probability model, the encoded code stream corresponding to the double prediction parameter information obtained by the encoded code stream receiving unit, and obtain the double prediction parameter information.

14. The device according to claim 13, wherein the decoding unit comprises:

   a decoding probability model determination unit, configured to determine a corresponding probability model for currently decoded double prediction parameter information from at least one probability model established for the currently decoded double prediction parameter information; and
   a decoding execution unit, configured to decode, according to the probability model determined by the decoding probability model determination unit, the encoded code stream corresponding to the currently decoded double prediction parameter information obtained by the encoded code stream receiving unit, and obtain the double prediction parameter information.

15. The device according to claim 14, wherein
when one type of the double prediction parameter information in the double prediction parameter information is a double prediction mark symbol identifier, the decoding probability model determination unit selects a corresponding probability model for a currently decoded double prediction mark symbol identifier from at least one probability model established for the double prediction mark symbol identifier, according to double prediction mark symbol identifiers of an adjacent left block and an adjacent upper block of a currently decoded macro block, or, according to a macro block type of the currently decoded macro block;
and/or,
when one type of the double prediction parameter information in the double prediction parameter information is a model prediction accuracy flag, the decoding probability model determination unit selects a corresponding probability model for a currently decoded model prediction accuracy flag from at least one probability model established for the model prediction accuracy flag, according to a double prediction mode that is most probably to be adopted by a currently decoded macro block, or, according to a macro block type of the currently decoded macro block;
and/or,
when one type of the double prediction parameter information in the double prediction parameter information is second mode information, the decoding probability model determination unit selects a corresponding probability model for currently decoded second mode information from at least one probability model established for the second mode information, according to a double prediction mode, which is most probably to be adopted by a currently encoded macro block, and an index of a currently encoded binarized value bin, or, according to a macro block type of the currently decoded macro block.

16. The device according to claim 15, wherein if the probability model determination unit selects a corresponding probability model for the currently decoded second mode information according to the double prediction mode, which is most probably to be adopted by the currently decoded macro block, and the index of a binarized value bin of a currently encoded macro block, an index of the selected probability model is equal to a value obtained by multiplying a sequence number of the double prediction mode, which is most probably to be adopted by the currently decoded macro block, by three, and adding an index value of a currently decoded binarized value bin.

Establish three different probability models for sop_flag — 1

Binarize values of the syntax element sop_flag — 2

Select a probability model for sop_flag of the current macro block according to a value of sop_flag of an adjacent macro block of a current macro block — 3

Perform CABAC encoding on the binarized value bin by using the probability model selected for the value of sop_flag of the current macro block — 4

FIG. 1

FIG. 2

Establish a probability model for pred_sp_mode_flag — 1

Binarize values of the syntax element pred_sp_mode_flag — 2

Perform CABAC encoding on the binarized value bin by using the probability model established for pred_sp_mode_flag of the current macro block — 3

FIG. 3

| | |
|---|---|
| Establish 27 different probability models for rem_sp_mode | 1 |

| | |
|---|---|
| Binarize values of the syntax element rem_sp_mode | 2 |

| | |
|---|---|
| Assign an index of currently encoded bin as 0, binIndex=0 | 3 |

| | |
|---|---|
| Select a probability model of the currently analyzed bin according to the current most probable mode and the binIndex value | 4 |

| | |
|---|---|
| Perform CABAC encoding on a binarized value of a binIdex$^{th}$ bin by using the selected probability model for rem_sp_mode of the current macro block | 5 |

binIndex+1  Yes  Whether binIndex is smaller than 2

No

End

FIG. 4

Establish three different probability models for sop_flag — 1

Binarize values of the syntax element sop_flag — 2

Select a corresponding probability model for sop_flag of a current macro block according to the value of sop_flag of an adjacent macro block of the current macro block — 3

Perform CABAC code stream analysis on the received code stream by using the selected probability model selected for sop_flag of the current macro block, and after obtaining a bin, compare a value of the bin with the binarized values of sop_flag, so as to determine the values of sop_flag — 4

FIG. 5

Establish a probability model for pred_sp_mode_flag — 1

Binarize values of the syntax element pred_sp_mode_flag — 2

Perform CABAC code stream analysis on the received code stream by using the established probability model for pred_sp_mode_flag of the current micro block, and after obtaining a bin, compare a value of the bin with the binarized values of pred_sp_mode_flag, so as to determine the values of pred_sp_mode_flag — 3

FIG. 6

Establish 27 different probability models for rem_sp_mode    1

Binarize values of the syntax element rem_sp_mode    2

Assign an index of currently encoded bin as 0, binIndex=0    3

Select a probability model of the currently analyzed bin according to the currently most probable mode and the binIndex value    4

Perform CABAC encoding on a corresponding bin by using the selected probability model for rem_sp_mode of the current macro block, so as to obtain a bin    5

binIndex+1    Yes    Whether binIndex is smaller than 2?

No

Compare the obtained three bins with the binarized values of rem_sp_mode, and determine acocoresponding value of rem_sp_mode    6

FIG. 7

FIG. 8A

FIG. 8B

FIG. 8C

FIG. 8D

FIG. 8E

FIG. 8F

FIG. 8G

FIG. 8H

Distribution probability of various double modes
when the most probable mode is horizontal-up

Distribution probability
of various double modes
when the most probable
mode is horizontal-up

FIG. 8I

Encoding device based on double prediction

Parameter obtaining unit 91

Parameter encoding unit 92

Encoding probability model
determination unit 921

Encoding execution unit 922

FIG. 9

Decoding device based on double prediction

Encoded code stream receiving unit 101

Decoding unit 102

Decoding probability model determination unit 1021

Decoding execution unit 1022

FIG. 10

Encoded code stream

sop_flag probability model

pred_sp_mode_flag probability model

rem_sp_mode probability model

Bit value bin translation

Sop_flag, pred_sp_mode_flag, rem_sp_mode

Syntax element translation

FIG. 11

# INTERNATIONAL SEARCH REPORT

| | International application No. |
|---|---|
| | PCT/CN2010/070191 |

**A. CLASSIFICATION OF SUBJECT MATTER**

H04N7/32(2006.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

WPI, EPODOC: double, two, predict, residual, encode, code, decode, compress, probability, statistics, context, mark, flag, index, macro block, syntax

CPRS, CNKI:

**C. DOCUMENTS CONSIDERED TO BE RELEVANT**

| Category* | Citation of document, with indication, where appropriate, of the relevant passages | Relevant to claim No. |
|---|---|---|
| A | CN101159875A(UNIV ZHEJIANG)09 April 2008（09.04.2008）the whole document | 1-16 |
| A | CN101262607A(UNIV ZHEJIANG)10 September 2008（10.09.2008）the whole document | 1-16 |
| A | WO2008062687A1（NIPPON ELECTRIC CO）29 May 2008（29.05.2008）the whole document | 1-16 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 09 April 2010（09.04.2010） | **22 Apr. 2010 (22.04.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **BAI Jiarong** Telephone No. (86-10)62411469 |
|---|---|

Form PCT/ISA /210 (second sheet) (July 2009)

## INTERNATIONAL SEARCH REPORT
Information on patent family members

| International application No. |
| --- |
| PCT/CN2010/070191 |

| Patent Documents referred in the Report | Publication Date | Patent Family | Publication Date |
| --- | --- | --- | --- |
| CN101159875A | 09.04.2008 | WO2009052697A1 | 30.04.2009 |
| CN101262607A | 10.09.2008 | None | |
| WO2008062687A1 | 29.05.2008 | EP2099210A1 | 09.09.2009 |
| | | CN101543036A | 23.09.2009 |
| | | US2010054617A1 | 04.03.2010 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910001970